# EUROPEAN PATENT APPLICATION

(11) **EP 4 807 395 A1**
(43) Date of publication of application: **16.09.2026**
(21) Application number: 25162970.5
(22) Date of filing: 11.03.2025
(51) Int. Cl.: G01S 7/521, G01S 15/04, G01S 15/87, G07C 1/24, G01S 15/58, G01S 15/88

(54) **A TIME TRACKING APPARATUS**

(71) Applicant: Inovacijos Sportui, MB, 74207 Jurbarkas (LT)
(72) Inventor: PILIPUNAS, Rytis, 09228 Vilnius (LT); LUKOSEVICIUS, Darius, 57406 Kedainiai (LT); ZELVYS, Vytautas, 11311 Vilnius (LT)
(74) Representative: Lind Edlund Kenamets Intellectual Property AB

(57) **Abstract**

The present invention relates to a time tracking apparatus and a time tracking system for determining a track time of a moving object on a travelling path, the time tracking system comprising at least two time tracking apparatuses. The invention further relates to a method of determining a track time of the moving object.

## Description

### FIELD OF THE INVENTION

The present invention generally relates to a time tracking apparatus and a system comprising time tracking apparatuses and a method of determining a track time of a moving object on a travelling path.

### BACKGROUND OF THE INVENTION

Tracking and characterizing the movement of objects in space may be achieved through various measurement techniques tailored to specific applications and environmental conditions. One of the main domains that accurate time measurements of moving objects play a significant role is in sports where speed, acceleration, and time-durations associated with moving objects, in this case the athletes, should be characterized with high precision where milliseconds could determine outcomes of records in competitions or training and preparation sessions.

More specifically, in speed and agility training accurate time measurements play an important role for tracking progress, identifying strengths, and improving overall performance. To this end, split times, track times and total race durations may be recorded for runners, swimmers, or cyclists repeatedly in order to collect time-based measurement results and build extensive datasets that could be analyzed and refined continuously to track and optimize training sessions.

Traditional methods such as stopwatches are affordable and widely available. However they heavily depend on human reaction times, which may introduce inconsistencies and errors up to 0.2 seconds per measurement. In addition to being unreliable and prone to large variations, such error margins are considered to be significantly unfavorable in high-performance contexts. Furthermore, the manual approaches lack automation capabilities and do not provide any possibilities for detailed analytics.

High-precision electronic timing systems such as professional laser or RFID gates measurement setups provide high accuracy but are prohibitively expensive for most schools, small clubs, and independent coaches. This in turn makes these systems inaccessible for a significant portion of the market. Furthermore, many existing high precision systems require extensive setup time, calibration, and maintenance, discouraging frequent use for quick training sessions. For instance, despite providing high accuracy and being suitable for professional use laser timing gates are expensive, difficult to set up, and require alignment precision. Similarly, infrared timing systems may be effective for sprint start/stop detection with high accuracy, however they have proven to be vulnerable to environmental interferences, e.g., sunlight or objects blocking their beam. RFID Systems are effective for tracking large groups or long distances, but in addition to high costs, and complex setup, they tend to be an excessive option for short-distance training scenarios.

Accordingly, there is a need for affordable, high-precision and reliable solutions in the field of detection and characterization of time-based measurements for moving objects, and specifically for athletes involved in sports training sessions.

### SUMMARY OF THE INVENTION

It is an object of the present invention to provide an apparatus and a system and method for solving or at least alleviating some of the above-mentioned drawbacks and problems with the solutions of prior art for determining track time of a moving object, e.g., an athlete, moving on its travel path.

These and other objects may be achieved by a time tracking apparatus for determining a track time of the moving object on a travelling path being detected by the time tracking apparatus. Further, the objects may be achieved by a time tracking system comprising at least two time tracking apparatuses and a method for determining the track time of the moving object as defined in the appended independent and dependent claims herein.

The term exemplary is in the following to be interpreted as serving as an example, example implementation, instance, or illustration.

According to a first aspect of the present invention, there is provided a time tracking apparatus for determining a track time of a moving object on a travelling path. The moving object will be detected by the time tracking apparatus. The time tracking apparatus comprises a portable housing configured to be removably mounted on a target surface. Further, the time tracking apparatus comprises an ultrasonic transducer arranged within the housing and configured to transmit ultrasonic signals to a target region in a surrounding environment of the apparatus. The ultrasonic transducer is further configured to receive ultrasonic reflection signals associated with the transmitted ultrasonic signals reflected by the moving object intersecting the target region. The time tracking apparatus further comprises a processing device arranged within the housing. The processing device is configured to obtain a set of detection time measurements included in a track time measurement event associated with the travelling path of the moving object. At least one of the obtained detection time measurements is generated upon a respective reflection signal of the moving object being registered by the ultrasonic transducer. The processing device is further configured to determine a track time for a respective segment of the traveling path of the moving object by comparing at least a first and a second detection time measurement associated with that segment.

In some exemplary embodiments, at least one detection time measurement in the obtained set of detection time measurements may be obtained from an external time tracking apparatus arranged remotely from the time tracking apparatus. The at least one obtained detection time measurement for the time tracking apparatus and the external time tracking apparatus may comprise an indication of detection of the moving object as well as a timestamp of a detection instance of the moving object by that time tracking apparatus.

The present invention is based on the realization that precision, affordability, and simplicity for a time tracking device may be achieved by means of a portable and affordable ultrasonic-based time measurement apparatus that has a compact design and is optimized for accurate tracking of moving objects such as athletes on racetracks. The presented time tracking apparatus provides at least a ±0.02 second time measurement accuracy in operation. Furthermore, the time tracking apparatus not only detects the records the track time of the moving objects independently, but is also capable of obtaining time measurement data from external time tracking devices in order to determine several track time variants such as split times, lap times, etc. comparatively and in cooperation with the external device.

In some embodiments, the housing may further comprise a beam emitter aperture arranged to convey an ultrasonic beam generated by the ultrasonic transducer to the target region. Further, the ultrasonic transducer may comprise at least one piezoelectric acoustic element configured to generate ultrasonic vibrations to emit the ultrasonic beam to be incident on at least one portion of the moving object intersecting the target region. The ultrasonic transducer may further comprise an impedance matching layer arranged in between the piezoelectric acoustic element and the beam emitter aperture in order to maximize an acoustic energy transmission of the ultrasonic beam to the target region. The aperture thus exposes the impedance matching layer to the surrounding environment of the time tracking apparatus, e.g., for an air-coupled transmission of the ultrasonic beams. The housing may further comprise an insulating layer comprising a first and a second portion, wherein each portion is made of a respective first and second insulating material. The insulating layer may be configured to dampen ultrasonic vibration signals originating from vibrations of the housing registered by the ultrasonic transducer.

In some embodiments, the ultrasonic beam generated by the piezoelectric acoustic element may have a conical shape or a fan shape with a divergence angle between 2 degrees and 45 degrees, more specifically between 5 degrees and 20 degrees and even more specifically between 8 degrees and 12 degrees. In some example embodiments the beam angle may be 10 degrees.

In some embodiments, the impedance matching layer may be made of a thermoplastic polymer material such as Acrylonitrile butadiene styrene (ABS) plastic. In some example implementations, the impedance matching layer may be made of Aluminum, LDPE (low density polyethylene), or polypropylene (PP).

In some exemplary embodiments, the first portion of the insulating layer may be made of Ethylene Vinyl Acetate (EVA) plastic and wherein the second portion may be made of a silicon-based polymer material.

According to a second aspect of the present invention there is provided a time tracking system for determining a track time of a moving object on a travelling path. The time tracking system comprises at least two time tracking apparatuses according to any one of the embodiments of the first aspect of the present disclosure. A first time tracking apparatus of the at least two time tracking apparatuses may be configured to operate as a central time tracking hub in order to obtain a set of respective detection time measurements from a plurality of external time tracking apparatuses arranged remotely from the first time tracking apparatus. The obtained respective detection time measurements are included in the track time measurement event associated with the travelling path of the moving object. The detection time measurement for the central time tracking hub and the obtained respective detection time measurements for each external time tracking apparatus comprise an indication of detection and a timestamp of a detection instance of the moving object by that time tracking apparatus.

In some exemplary embodiments, the measurement event for the moving object may be commenced when the moving object intersects the target region of any one of the at least two tracking apparatuses for the first time.

In some exemplary embodiments, the time tracking apparatus may comprise a transceiver module adapted to establish a Bluetooth low energy, BLE, connection with at least one other time tracking apparatus comprised in the time tracking system.

In some examples, each time tracking apparatus may be configured to exchange its respective internal BLE connection time interval value to with the central time tracking hub in order to establish a synchronized time reference in the time tracking system.

Further in some example embodiments, the timestamp of the detection instance of the moving object for each time tracking apparatus may be determined, by the processing device of that time tracking apparatus, based on the internal BLE connection time interval value of that time tracking apparatus relative to the synchronized time reference.

In some example embodiments, the processing device of the central time tracking hub may be configured to determine a track time for the respective segment of the traveling path of the moving object by comparing at least a first and a second detection time measurement associated with that segment.

The present inventors have further realized that in a multi-device system a reliable time synchronization may be achieved between the time tracking devices by utilizing the BLE data communication events. Thus, BLE connection intervals may be advantageously used for time synchronization between devices, eliminating the need for expensive and dedicated clock synchronization hardware. Furthermore, the invention is based on the insight that each time tracking device comprised in the system maintains an internal BLE connection interval counter, which increments based on the connection intervals during the entire connection time between the time tracking devices, as well as during an active time measurement event. This way, the internal BLE connection time interval value of each device at the time of detection of the moving object may be recorded and timestamped in order to be utilized in a subsequent data analysis step for determining the track time of the moving object.

According to a third aspect of the present disclosure, there is provided a method of determining a track time of a moving object on a travelling path. The moving object will be detected by at least two time tracking apparatuses according to any one of the embodiments of the first and/or second aspect presented herein. The at least two time tracking apparatuses are comprised in a time tracking system. The method comprises obtaining, from the at least two time tracking apparatuses, a set of respective detection time measurements, wherein the obtained detection time measurements are included in a track time measurement event associated with the travelling path of the moving object. Each of the detection time measurements comprises an indication of detection and a timestamp of a detection instance of the moving object by that time tracking apparatus. The method further comprises determining a track time for a respective segment of the traveling path of the moving object by comparing at least a first and a second detection time measurement associated with that segment.

In some embodiments, the method may further comprise arranging a first time tracking apparatus of the at least two time tracking apparatuses to operate as a central time tracking hub. Further, the method may comprise establishing a Bluetooth low energy (BLE) connection between the at least two time tracking apparatuses comprised in the time tracking system. The method may further comprise receiving, at the central time tracking hub, an internal BLE connection time interval value from each of external time tracking apparatuses in order to establish a synchronized time reference in the time tracking system. Further, the method may comprise determining, by a processing device of each time tracking apparatus the timestamp of the detection instance of the moving object based on the internal BLE connection time interval value of that time tracking apparatus relative to the synchronized time reference.

According to yet another fourth aspect of the present disclosure, there is provided a computer program product comprising instructions which, when the program is executed by one or more processors of the processing device of each time tracking apparatus, causes that processing device to carry out the method according to any one of the embodiments of the method of the third aspect.

Further embodiments of the different aspects are defined in the dependent claims.

It is to be noted that all the embodiments, elements, features and advantages associated with the first aspect also analogously apply to the second, third and fourth aspects of the present disclosure.

These and other features and advantages of the present disclosure will in the following be further clarified in the following detailed description.

### BRIEF DESCRIPTION OF THE DRAWINGS

This and other aspects of the present invention will now be described in more detail, with reference to the appended drawings showing embodiments of the present invention. The drawings are only schematic and the relative dimensions of some structures and layers may be exaggerated and not drawn to scale. Rather the dimensions may be adapted for illustrational clarity and to facilitate understanding.
Fig. 1a shows a schematic perspective view of a time tracking apparatus according to some exemplary embodiments of the present disclosure.
Fig. 1b shows a schematic cross-sectional side view of the time tracking apparatus of Fig. 1a according to some exemplary embodiments of the present disclosure.
Fig. 2a shows a schematic perspective view of a time measurement scenario involving a plurality of time tracking apparatuses according to some exemplary embodiments of the present disclosure.
Fig. 2b shows a schematic block diagram of a processing device of a central time tracking apparatus comprised in a time tracking system according to some exemplary embodiments of the present disclosure.
Fig. 3 shows a flowchart of a method according to some exemplary embodiments of the present disclosure.

### DETAILED DESCRIPTION

The following disclosure presents various embodiments or examples for implementing different aspects of the provided subject matter. Specific examples of implementing the method are described to simplify the disclosure. These examples are not intended to be limiting. Additionally, reference numerals and/or letters may be repeated in various examples for simplicity and clarity, without implying a specific or limiting relationship between the different embodiments and/or configurations discussed, unless stated otherwise.

It is further to be noted that terms such as "first" and "second" etc. with reference to elements or steps may be used herein as labels to facilitate distinguishing between different elements and need not necessarily imply that such elements or steps are arranged or performed in that particular order, unless stated otherwise.

Those skilled in the art will appreciate that the steps, services and functions explained herein may be implemented using individual hardware circuitry, using software functioning in conjunction with one or more programmed microprocessors, microcontrollers, or general-purpose computers, using one or more Application Specific Integrated Circuits (ASICs) and/or using one or more Digital Signal Processors (DSPs) or some other programmable logical device, such as a Field Programmable Gate Array (FPGA). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

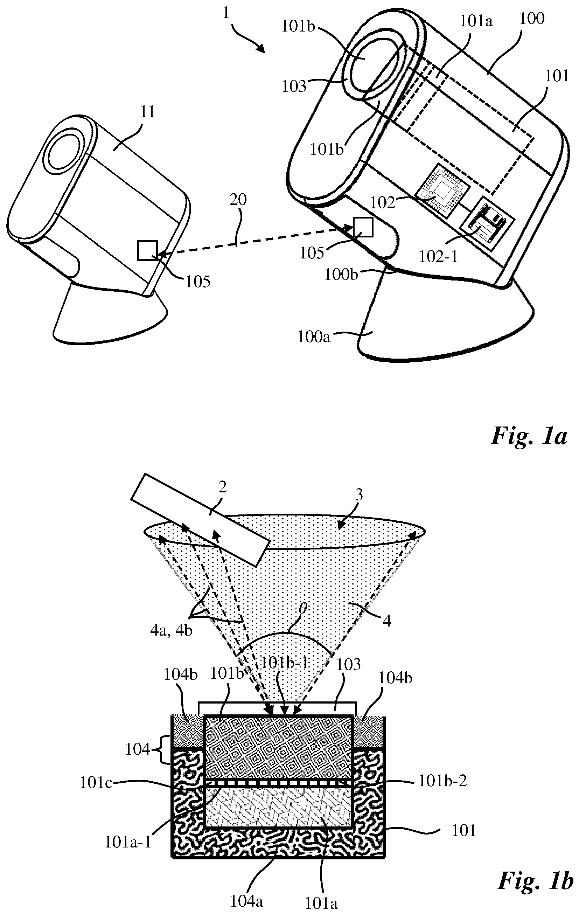

Fig. 1a shows a schematic perspective view of an exemplary time tracking apparatus 1 according to some embodiments of the present disclosure. The time tracking apparatus 1 may be interchangeably referred to as the time tracking device 1 or time tracking sensor 1 in the rest of this description. The time tracking apparatus 1 is configured for performing time measurements. The time tracking device 1 may be equipped with an internal rechargeable battery and may feature a charging port, such as USB-C for power management.

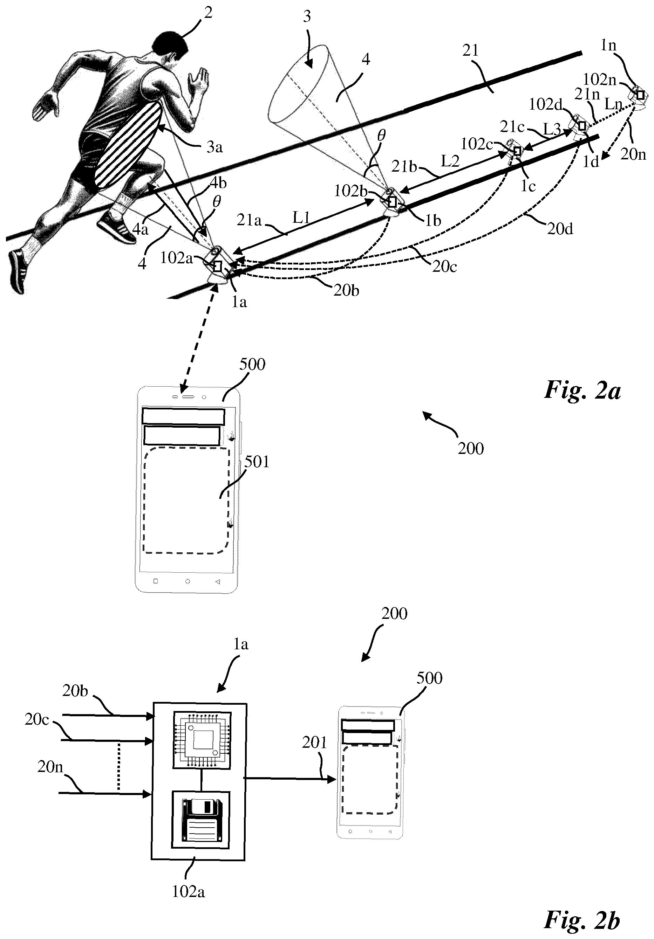

More specifically, the time tracking device 1 may be configured to determine a track time of a moving object 2 on a travelling path 21, e.g., as shown in Fig. 2 which will be discussed in the following. More specifically, the time tracking device 1 may be configured to perform time measurements for a sport activity such as a sports training session or a running, cycling, swimming, horse riding, or similar sports activities where track times should be measured to determine the outcome of the race and the competitive performance. By a track time in the present context, it is meant the time that it takes for the object to move from one point in space such as point "A" to another point such as point "B" along the travelling path of the object. The track time naturally will be a factor of the travelling velocity or speed of the object as well as the length of the track or travelling path. The time tracking apparatus 1 in some examples is a portable device that could be transported easily to be installed as a target site. The target site may be a surface or otherwise a specific location in the environment that time measurements will be performed using the time tracking device 1. The time tracking device 1 may further be arranged to be removably mounted on the target surface. Thus, the device 1 may be moved between different target locations and surfaces to be installed and unmounted repeatedly and with ease, without the need for any specific equipment or prior knowledge. This way in a plug and play approach, the time tracking device 1 will be ready to perform time measurements right after a quick installation. In several embodiments, the time tracking device 1 comprises a portable housing 100 configured to be removably mounted on the target surfaces at target installation sites. In some example embodiments, the housing 100 may comprise a base member 100a. The base may be connected to the main body of the housing 100 at a connection point 100b. The base 100a is designed for versatile installation and may be configured to enable placing the time tracking apparatus 1 on target surfaces and structures. The target surfaces may be the surface of a part of the track e.g. a ground surface or it may be a surface of a wall or may be any other target surface or compatible structure suitable for mounting the time tracking device 1. The base 100a may be manufactured monolithically with the housing 100. Alternatively, the base 100a may be detachable from the main body of the housing 100, for instance by connection techniques such as screws and bolts, magnetic attachment clips, snap-fit arrangements, or similar as *per se* known in the art. The base 100a may be removably mountable on the target surfaces by any attachment techniques such as bolts and screws, impermanent glue, one or more attachments plugs, or the like. The base member 100a may simply be placed on the target surface e.g., on a flat ground surface in a stable manner without the need for any fastening means. Another advantage of the base member 100a being detachable from the main body of the housing 100 comprising the measurement equipment, i.e., is that it enables having several bases permanently placed at a target site, where only a few of the bases 100a placed at specific measurement locations in the target space will be used to attach the measurement equipment thereto.

The time tracking device 1 further comprises an ultrasonic transducer 101 arranged within the housing 100. The ultrasonic transducer 101 is one of the main parts of the measurement equipment arranged within, i.e., inside the main body 100 of the housing. The ultrasonic transducer is configured to transmit ultrasonic signals 4a to a target region 3 in a surrounding environment 3a of the apparatus 1. By surrounding environment, it is meant the external space that surrounds the time tracking device 1, into which ultrasonic beams will be emitted by the transducer 101 of the time tracking device 1 in order to detect a moving object 2 that may be present in that space and target region 3. The target region 3 in the present context is to be understood as the area of the surrounding environment seen in 2D that may be covered by an ultrasonic beam 4 emitted by the ultrasonic transducer 101. However, it should be clear to a skilled person that the target region may be defined as the entire volume in the space that the ultrasonic beam 4 occupies and scans. For example, as shown in Fig. 1b, if an ultrasonic beam 4 has a conical shape, the target region 3 is the entire volume of the cone 3 that will be scanned by the conical beam 4. The ultrasonic transducer 101 is further configured to receive ultrasonic reflection signals 4b associated with the transmitted ultrasonic signals 4a reflected by the moving object 2 intersecting the target region 3. The ultrasonic reflection signals 4b may be referred to as echoes or echo signals. In several embodiments, the ultrasonic transducer 101 may comprise at least one piezoelectric acoustic element 101a configured to generate ultrasonic vibrations to emit an ultrasonic beam 4. In some embodiments, the piezoelectric acoustic element 101a may be made of piezoceramic material having a disk shape 101a. Even though the piezoelectric acoustic element 101a throughout this description will be discussed as a single piezoelectric acoustic element 101a, it should be clear that the ultrasonic transducer 101 may comprise a plurality of piezoelectric acoustic elements, such as one or more arrays of piezoelectric acoustic elements. In some example implementations, the piezoelectric element 101a, any have any other suitable shapes or geometries in order to produce the desired ultrasonic beams 4. For instance, the piezoelectric element may have a rectangular shape in order to generate fan-shaped waveforms, etc.

The piezoelectric acoustic element 101a vibrates at the ultrasonic frequency of the ultrasonic signals in order to generate ultrasonic waves. The ultrasonic beam 4 is to be incident on at least one portion of the moving object 2 that intersects the target region 3. In other words, the ultrasonic signals 4a transmitted to the target region 3 are carried by the ultrasonic beam 4 generated using the ultrasonic signals for delivering ultrasonic waves to the object 2. The wavefronts of the ultrasonic beams propagate in the direction of the target region 3 and are spatially shaped by the transducer 101. The beam has thus a certain beam angle *θ,* width, focus and direction. The target region 3 is therefore an area that is scanned by the ultrasonic beam in order to detect the presence of the objects 2, e.g. a moving object 2 intersecting the target region 3. The ultrasonic signals have certain waveforms with specific waveform information including ultrasonic frequencies, amplitude factors, modulation etc. that will be used to generate the ultrasonic beam by the piezoelectric acoustic elements 101a of the transducer 101. The ultrasonic beam will propagate the ultrasonic energy through the surrounding medium such as air or water. Further details regarding ultrasonic waves, signals and ultrasonic energy conveyed by the ultrasonic beams are presumed to be available to the skilled person and will not be discussed here.

In several embodiments, the housing 100 may further comprise a beam emitter aperture 103 arranged to convey the ultrasonic beam 4 generated by the ultrasonic transducer 101 to the target region 3. In some example implementations, for instance in case one or more arrays of ultrasonic piezoelectric elements may be present, the housing of the device may comprise more than one aperture adjusted to be aligned with the piezoelectric elements of each array.

The exemplary beams generated by the piezoelectric element 101a of the transducer 101 may have a conical shape having a beam angle *θ* As shown in Fig. 1b and Fig. 2a. In some example embodiments, the conical beam may have a divergence angle between 2 degrees and 45 degrees. In some example embodiments, the conical beam may have a divergence angle between 5 degrees and 20 degrees. In some example embodiments the conical beam 4 may have a divergence angle between 8 degrees and 12 degrees. Even more specifically, in some example embodiments, the conical beam 4 may have a divergence angle of 10 degrees. Similarly, fan-shaped beams 4 may also have the corresponding beam angle values as explained for the conical beams. One advantage of emitting ultrasonic beams with narrower beam angles, such as example beam angle of 10 degrees compared to wider beams is that it makes detection of the moving object 2 directly in front of the time tracking sensor 1, 11, 1a - 1n much more efficient and precise.

Moving on s shown in Fig. 1a and in moder detail in an example cross-sectional side view of the time tracking device 1 in Fig. 1b, the ultrasonic transducer 101 may comprise an impedance matching layer 101b arranged in between the piezoelectric acoustic element 101a and the beam emitter aperture 103 in order to maximize an acoustic energy transmission of the ultrasonic beam to the target region 3. In addition, the matching layer 101b enhances the received reflection signals from the moving objects. The aperture 103 is an opening in the body of the housing that is arranged to expose the impedance matching layer 101b to the surrounding environment of the time tracking apparatus, e.g., for an air-coupled transmission of the ultrasonic beams. The operational surface of the impedance matching layer 101b, i.e. the surface that emits the ultrasonic beam 4 to the outside space, may be entirely or at least partly be fitted to the aperture 103.

Thus, the impedance matching layer 101b will reduce reflection of sound waves due to impedance mismatch between the piezoelectric element 101b and the surrounding medium. This in turn improves the transmission of ultrasonic waves between the piezoelectric element 101a and the surrounding medium i.e. air or water, etc. In an exemplary embodiment, the piezoelectric acoustic element may be a ceramic disc 101b with an impedance of 35 MRayl, and the surrounding medium may be air with an acoustic impedance of 400 Rayl. The material choice of the impedance matching layer may be selected to be a thermoplastic polymer material. In some embodiments, the thermoplastic polymer material may be Acrylonitrile butadiene styrene (ABS) plastic. In some embodiments, the ABS plastic may have an acoustic impedance of 2.4 MRayl. The impedance matching layer 101b may have a layer thickness of one-quarter of the wavelength of the ultrasonic waves generated by the ultrasonic transducer 101. However, the thickness of the impedance matching layer may be engineered to further improve the sound wave transmission from the piezoelectric element 101a to the surrounding medium. For instance, a stack of several impedance matching layers of different materials each having a thickness of one-quarter wavelength could be used to improve the efficiency even further. In some embodiments, the impedance matching layer 101b may be attached to the beam-emitting surface 101a-1 of the piezoelectric element 101 at one side e.g., at a bottom surface 101b-2 by means of adhesive materials such as glue. For instance, a glue layer 101c is shown to be arranged between the piezoelectric element 101a and the impedance matching layer 101b attaching the beam-emitting surface 101a-1 to the bottom surface 101b-2 of the impedance matching layer 101b. The top surface 101b-1 of the impedance matching layer is arranged proximal to, and at least partly overlapping the beam emitter aperture 103 of the housing 100 such that the ultrasonic beam 4 generated by the piezoelectric element will be emitted towards the surrounding medium through the aperture 103.

In some embodiments, the ultrasonic transducer may comprise an insulating layer 104 comprising a first 104a portion and a second portion 104b. The insulating layer 104 is arranged within the housing 100. The insulating layer may be made of a respective first and second insulating material. The first 104a and second 104b portions of the insulating layer 104 may be arranged so as to partially surround the piezoelectric acoustic element 101a and the impedance matching layer 101b except at the beam-emitter surface 101b-1 of the impedance matching layer 101b aligned with the housing aperture 103 such that acoustic beam emission through the aperture is not hindered. The insulating layer 104 is configured to dampen ultrasonic vibration signals originating from vibrations of the housing 100 that are registered by the ultrasonic transducer 101. Stated differently, the generated acoustic vibrations by the piezoelectric element and the transducer itself to produce the ultrasonic beam may lead to the generation of noise distortions in the housing that if detected and registered by the receiver of the ultrasonic transducer 101 will negatively affect the quality of the received echo signals 4b at the transducer 101. Thus, the insulation layer 104 is arranged to buffer and reduce the undesired ultrasonic noise. In some embodiments, the first portion 104a of the insulating layer may be made of a plastic material such as Ethylene Vinyl Acetate (EVA) plastic. In some embodiments, the second portion 104b of the insulation layer 104 may be made of a silicon-based polymer material. The soft silicon-based polymer insulating portion 104b may be arranged within the housing such that imperfections in the inner space (not specifically shown) such as the inner walls of the housing 100 may be covered in order to further reduce the vibrational noise. In some example implementations, the housing 100 may be manufactured by additive manufacturing techniques such as 3D-printing to minimize reverberations and enhance noise control. 3D printed enclosures may have micro air pockets which may advantageously help to isolate and reduce vibrational noise even further.

Fig. 2 illustrates a schematic perspective view of a scenario where a moving object 2, in this example the athlete 2 is travelling along its travel path 21 at a given speed. The track 21 is equipped with a plurality of time tracking apparatuses. At least two apparatuses 1a - 1n ("n" being a natural number denoting any suitable number of time tracking devices) are arranged alongside the track 1 and are comprised in a time tracking system 200 according to some embodiments disclosed herein. In some example embodiments, the number of time tracking devices 1a - 1n may be two, three, four, five, six, seven, eight, nine, ten or any other number depending on the intended application. Since the moving object 2 is depicted as a running athlete 2 in the example of Fig. 2a, the track 21 may be referred to as a racetrack 21 or racecourse 21. It should be clear that the athlete may perform other sports activities such as swimming in a swimming pool (not shown) or cycling along a cycling lane, all of which may be similarly referred to as racetracks 21. It should also be noted that the moving object 2 may in some examples be an animal (not specifically shown) such as horse moving, e.g. galloping along a racetrack 21. In some examples, the moving object 2 may be a vehicle such as a race car (not specifically shown) driving along a travelling path such as a racetrack 21. It should also be appreciated that the embodiments of the invention are shown and discussed in the drawings with respect to one moving object for the sake of simplicity. All the discussions and advantages discussed for one moving object are equally applicable to a plurality of moving objects, for instance for two, three, four, five or any number of moving objects such as running athletes 2.

The segment may be the entire travel path such as the total racetrack, or it may be a portion 21a - 21n of the racetrack or racecourse. Each segment may have a certain length e.g., L1 - Ln that may be similar or different in distance lengths. Each segment may have a respective track time. The total duration of the race may be the time it takes for the athlete to encircle the racetrack only once, or alternatively multiple times. Each completed racetrack may be assigned a track time referred to as a lap time. Each segment of a complete racetrack may be assigned its own track time referred to as a split time, which is defined a fraction of the total race track time, i.e., the lap time. The total race duration is the time that takes to complete the entire length of the race which may comprise multiple racetrack lengths. The total race duration or total track time may thus comprise a plurality of lap times.

Each of the time tracking devices (1a - 1n) transmit ultrasonic signals 4a to the target region 3 for delivering ultrasonic waves to the body of the running athlete 2. The beam 4 has a certain beam angle *θ*, width, focus and direction as previously discussed. The ultrasonic beam 4 may be incident on at least one portion 3a of the body of the athlete 2 that intersects the target region 3.

Moving on, the time tracking device 1 may further comprise a processing device 102 arranged within the housing 100. The processing device 102 may comprise any suitable microprocessors, microcontrollers, ASICs, FPGAs, one or more memory or data storage modules 102-1 and the like. The processing device 102 may comprise additional modules such as receiver modules (not specifically shown) for receiving input data including ultrasonic signal data such as data from reflection signal 4b obtained from the transducer 101, analysis modules (not specifically shown) configured to analyze and process the received input data and the like. The processors or processing circuity in the processing device 102 may be configured to carry out the several functions and operations of the presented technology herein. In some embodiments, the ultrasonic transmission and reception may be managed by exemplary transformer drive analog front end for industrial ultrasonic applications. The transducer drive stage (not specifically shown) may comprise of low-side complementary drivers that can be configured to drive an ultrasonic transducer through a step-up transformer. The device may have a receive signal path that includes a low-noise linear amplifier, a bandpass filter, followed by a logarithmic gain amplifier for input dependent amplification. The logarithmic amplifier allows for high sensitivity for weak echo signals and offers input dynamic range over full range of reflected echoes. The transducer 101 driver device can be controlled through the processing device 102, e.g., a microcontroller for complete customization of the acoustic burst signals. Received ultrasonic signals may thus be amplified, filtered (bandpass), and processed via a logarithmic gain amplifier for enhanced sensitivity to weak echoes. The processed signals may then sampled by the processing device 102. In some implementations, the drive device may support a single transducer 101 to send and receive acoustic burst signals. In some implementations, the driver device may set up two transducers to split the transmission and reception functions.

In several embodiments, the processing device 102 may be configured to obtain a set of detection time measurements included in a track time measurement event associated with the travelling path 21 of the moving object 2 or otherwise stated a track time measurement event associated with the moving object 2. By a time measurement event for the moving object 2 here it is meant an instance of the time tracking device 1 or a system 200 comprising a plurality of time tracking devices 1a - 1n start time-based measurements for determining the track times of the moving object 2, e.g., the athlete 2 along its travel path 21.

By the detection time measurement for the time tracking apparatus, it is meant a time-based measurement performed by the time tracking apparatus 1 that is performed upon detection of the moving object, i.e., when the moving object 2 intersects (at least partially or entirely) the target region 3. The detection time measurement may comprise an indication of detection and a timestamp of a detection instance of the moving object 2 by the time tracking apparatus 1. In other words, the time tracking device 1 will record e.g., in a memory module 102-1 of the processing device 102 that the moving object has been detected by the time tracking device 1. Further, the time of detection of the object 2 will also be recorded and assigned a respective timestamp. In example implementations, where a single time tracking device 1 may be used, the internal clock of the processing device 102 may be utilized for performing time measurements and assigning the respective timestamps to the detection time measurements.

In some examples, the measurement event for the moving object 2 may be commenced when the moving object 2 intersects the target region 3 of the time tracking device 1 (e.g., when there is a single time tracking device 1 may be installed) for the first time. In case, there are more than one time tracking devices arranged in the measurement location such as at least two devices 1a - 1n, the measurement event for the moving object 2 may be commenced when the moving object 2 intersects the target region 3 of any one of the at least two tracking apparatuses 1a - 1n for the first time.

In some examples at least one of the obtained detection time measurements may be generated upon a respective reflection signal of the moving object 2 being registered by the ultrasonic transducer 101. In other words, the processing device 102 in operational communication with the ultrasonic transducer 101 of the time tracking device 1 may at least register one of the echo signals that have been reflected by the moving object 2 intersecting the target region 3. In operation, where there is only one time tracking device 1 installed in the measurement location and in an example when the athlete 2 will run only one lap, the first detection signal will be registered by the time tracking device 1 when the athlete first crosses the target region 3 of the device 1 and is detected by the device 1. This detection starts the time-based measurement event for the moving object 2. The second measurement and detection may also be registered by the processing device 102 upon detection of the moving object by the ultrasonic transducer 101 of the same time tracking device 1, when the athlete 2 intersects the target region 3 for the second time. In some embodiments, the second time detection may terminate the measurement event, or if the athlete will continue to run further laps, the measurement event will accordingly continue, until otherwise instructed by the processing device 102 or upon receiving termination instructions from a user of the system e.g., via an external unit 500 in operational connection with the processing device 102. In some embodiments, as shown in Fig. 2 the time tracking device 1 may be configured to be in communication with an external unit 500 such as a handheld controller, a mobile device, personal computer, a smart watch or wearable device, and the like having a user interface 501 for entering and transmitting control commands as well as transmitting and/or receiving information and data to and from the time tracking devices 1. In some example implementations, the moving object 2 may be identified by the external unit 500 by means of signals received from a tag attached to the moving object 2. For instance, a smart watch worn by a specific athletes may transit signals with identification information of that athlete to the external unit 500, identifying the specific athlete in a database in order to assign the time measurements to that athlete. In some example implementations, the external unit 500 may be carried by the moving object, such as the smart wearable devices (not specifically shown) of the athlete that may connect to the time tracking devices 1 in order to receive time measurement results such as split times, lap time, etc. in real time by the athlete 2. For instance, a mobile application may be devised in order to receive and record the track time measurements by the time tracking device 1. Further, instructions may be sent to the processing device 102 of the time tracking device 1 in order to set up parameters such as number of laps, number of time measurements to be recorded, number of split times for each lap, instructions for measurement event termination, or any other configuration parameters for the time tracking devices 1. The time tracking devices 1 and the external mobile controller 500 may be connected to each other over a communication network using wireless communication technologies such as wireless local area network (LAN), Wi-Fi, Bluetooth, etc. Furthermore, firmware updates via the mobile application may enable continuous improvement and customization of the system's detection and data analysis algorithms. In some embodiments, the mobile application may be in communication with external networks such as cloud services (not specifically shown) for transmitting the recorded data to be stored in database or the like. It should be clear that the received data may also be stored locally in the mobile device.

In some example implementations, prior to start of each time measurement event, the system 200 may initiate a self-calibration process to ensure optimal detection of the moving objects 2. During calibration, all time tracking devices 1a - 1n may analyze their active ultrasound fields to identify potential interferences, such as walls or other stationary objects within the detection range.

If any interference is detected, the calibration process may adjust the system's signal parameters to filter out these stationary objects, ensuring effective and accurate object detection. This ensures that only dynamic objects, such as the running athlete, would be captured reliably during the time measurement event. Calibration step also enhances the system's robustness and minimizes false detections or disruptions caused by environmental factors.

Moving on, in some example implementations, at least one detection time measurement in the obtained set of detection time measurements may be obtained from an external time tracking apparatus 11 arranged remotely from the time tracking apparatus 1. This is shown in the example illustration in Fig. 1a, wherein the time tracking apparatus 1 may be arranged to be in communication with the external time tracking apparatus 11 via a communication link 20. In several embodiments, the communication link may be a Bluetooth communication link 20.

In several embodiments, the processing device 102 of the time tracking device 1 may be configured to determine a track time for a respective segment 21a - 21n of the traveling path 21 of the moving object 2 by comparing at least a first and a second detection time measurement associated with that segment. In the above-mentioned example of only using a single time tacking device 1 for measuring the time of a single lap, the track time (lap time) will be determined as the elapsed time between the first detection signal registered by the time tracking device 1 when the athlete crosses the target region 3 of the device 1 for the first time, and the second detection time measurement registered at the end of the lap. When the time tracking system 200 for determining a track time of the moving object 2, e.g., the athlete 2 in Fing. 2 on its travelling path 21, comprises the at least two time tracking apparatuses 1a - 1n, the track time of various segments 21a - 21n of each lap may be easily and independently recorded and analyzed in order to obtain an expansive amount of data on the performance of the running athlete 2. This way individual split times for different segments performed during several training sessions may be compared which will contribute to extracting certain performance patterns to further improve the athlete performances or for modifying the training program. Accordingly, the plurality of the time tracking devices 1a - 1n will be configured to cooperate with each other for detecting and registering the track time of the moving object 2 under various conditions such as training schemes.

In several embodiments, a first time tracking apparatus 1a of the at least two time tracking apparatuses may be configured to operate as a central time tracking hub 1a. The central hub 1a may be referred to as a master time tracking device 1a or the master 1a through this description. This way a master-slave configuration may be provided for data traffic management and reception and analysis of time measurements performed by multiple time tracking devices 1a - 1n. The master 1a will be configured to obtain a set of respective detection time measurements, included in the track time measurement event associated with the travelling path 21 of the moving object 2 from the plurality of external time tracking apparatuses 1b - 1n. The external time tracking devices 1b - 1n are arranged remotely from the master device 1a. The detection time measurement for the central time tracking hub 1a and the obtained respective detection time measurements for each external time tracking apparatus comprises an indication of detection and a timestamp of a detection instance of the moving object 2 by that time tracking apparatus 1a - 1n. Similar to what was mentioned earlier with respect to a single time tracking device 1, in several examples, the measurement event for the moving object 2 by the time tracking system 200 may be commenced when the moving object 2 intersects the target region 3 of any one of the at least two tracking apparatuses 1a - 1n for the first time. In other words, as soon as one of the time tracking devices detects the moving object 2, e.g. a portion of the body of the athlete 2 entering the target region of that device, the measurement event for all the time tracking devices will start. In some non-limiting examples, the time measurement event may end when the moving object 2 is detected by the last time tracking sensor, e.g., sensor 1d in case of total four time tracking sensors 1a - 1d being arranged alongside the racetrack. In some examples, the time measurement event may continue unless further instructions are received from the processing device 102a of the master time tracking device 1a or from the mobile device 500 or the operator of the system 200.

In some example embodiments, each time tracking apparatus 1a - 1n may comprise a transceiver module 105 adapted to establish communication links between the time tracking devices 1a - 1n and/or any external devices such as the mobile device 500. In several embodiments, the transceiver module 105 may be configured to establish a Bluetooth low energy (BLE) connection with at least one other time tracking apparatus comprised in the time tracking system 200. In some examples, all the time tracking devices 1a - 1n will be configured to establish a BLE communication. Accordingly, each time tracking apparatus 1a - 1n may be configured to exchange its respective internal BLE connection time interval value with the central time tracking hub 1a in order to establish a synchronized time reference in the time tracking system 200. In other words, a bidirectional BLE communication will be established between each external time tracking device 1b - 1n and the master time tracking device 1a. In some examples, all of the time tracking devices 1b - 1n except the master device 1a will communicate and transmit their data packets to the master time tracking device 1a via their respective BLE connections 20b - 20n to the master device 1a. Accordingly, in some example implementations, each time tracking apparatus 1b - 1n, except the central time tracking hub 1a, may be configured to transmit an internal BLE connection time interval value to the central time tracking hub 1a in order to establish the synchronized time reference in the time tracking system 200. As mentioned above, the master time tracking device 1a may also communicate its data packets including its internal BLE connection time interval value to all the other time tracking devices 1b - 1n in order to establish the synchronized time reference. The established BLE data communication and the synchronized time reference may be maintained during the entire duration of the time measurement event.

The present inventors have realized that in a multi-device system 200, time synchronization between time tracking devices may be advantageously achieved through their BLE connection intervals, defined as the time between two data transfer events (BLE connection events) between the central or master time tracing device 1a and rest of the time tracking devices 1b - 1n. In example implementations, the shortest BLE connection interval duration may be 7.5 ms. The BLE connection interval may have another value, e.g., it may be longer than 7.5 ms and is presumed to be known according to the BLE technology standard. In operation, when the multiple devices 1a - 1n of the system 200 are being set up, they may negotiate e.g., by means of the processing device 102a - 102n of each time tracking device, the connection intervals and utilize it as a shared time reference. Each device 1a - 1n maintains an internal connection interval counter, which may be incremented based on its BLE connection intervals. This way a versatile, yet straightforward method is utilized for recording detection times of the object 2 by each time tracking device 1a - 1n and respective timestamps are assigned based on each specific BLE connection interval counter value of that device at the time of recording the detection of the moving object 2. Thanks to the established shared time reference and time synchronization between the time tracking devices 1a - 1n, the processing device 102a of the central or master device 1a will be able to calculate the elapsed times for each split time, lap time or total duration of the measurement event by obtaining the respective detection time measurements from the other time measurement devices 1b - 1n, as well as by using its own detection time measurement for the moving object. In some example embodiments, only a set of the plurality of the time tracking devices 1b - 1n may be active and communicate their detection time measurements to the master device 1a. In some example implementations, all the time tracking devices 1b - 1n being present along the racetrack may communicate their respective detection time measurements to the master device 1a. As mentioned earlier, the timestamp of the detection instance of the moving object 2 for each time tracking apparatus 1a - 1n may be determined, by the processing device 102a - 102n of that time tracking apparatus, based on the internal BLE connection time interval counter value of that time tracking apparatus 1a - 1n relative to the synchronized time reference. Furthermore, another advantage of addition of timestamps to the detection instances of the moving object 2 by the time tracking devices 1a - 1n is to eliminate effects of signal transmission latency between the time tracking devices. This is because the BLE connection interval counter value associated with detection of the moving object 2 by each time tracking device 1a - 1n is recorded and any signal transmission latencies may be eliminated in subsequent data analysis steps, e.g., track time determinations steps performed by the processing device 102a of the central time tracking hub 1a.

In some example embodiments, the processing device 102a of the central time tracking hub 1a may be configured to determine a track time for the respective segment 21a - 21n of the traveling path of the moving object 2 by comparing at least a first and a second detection time measurement associated with that segment 21a - 21n. The elapsed time for each segment 21a - 21n or multiple segments for that matter, may be calculated by determining the connection interval counter value differences Δ*BLE* associated with those segments and then multiplying this determined interval value difference by the single interval duration, e.g., 7.5 ms. For example, if the BLE interval counter value difference Δ*BLE* for segment 21a recorded by the time tracking devices 1a and 1b equals 1000, then the elapsed time will be 1000 × 7.5ms= 7500 ms, and so on. In several embodiments, the master time tracking device 1a, and more specifically, the processing device 102a of the master device 1 may communicate the calculated elapsed times for each of the segments, split times, lap times, total duration, etc. to the mobile device 500. The results may thus be recorded, stored and/or displayed by the mobile device 500 to the user of the system 200, e.g., via the user interface 501. This way extensive log data may be accumulated and used in order to build databases related to record times of moving objects 2 e.g., each athlete 2 or group of athletes 2 that will be analyzed for extracting information and pattern recognition in the data.

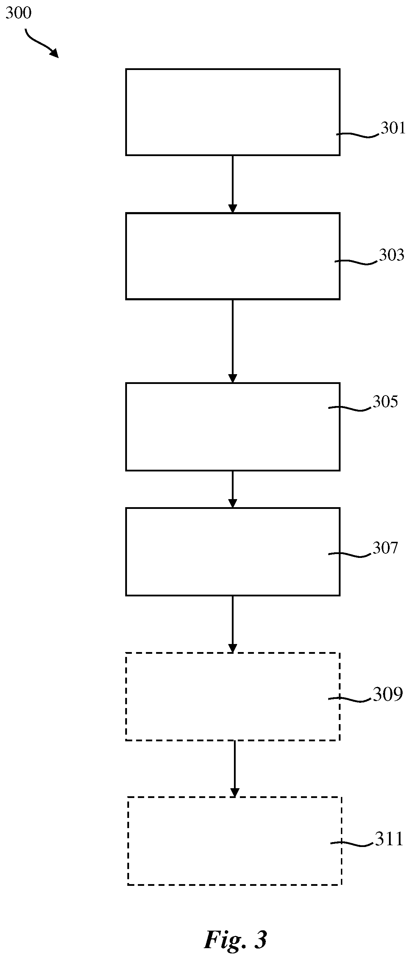

Fig. 3 shows a schematic flowchart of a method **300** according to several embodiments of the present invention. The method **300** is for determining a track time of a moving object 2 on a travelling path 21, being detected by at least two time tracking apparatuses 1a - 1n comprised in a time tracking system 200. The time tracking devices 1a - 1n have been extensively described in the foregoing with respect to Figs. 1 and 2. The method 300 may be implemented by the processing device 102a of a master or central time tracking device 1a in the system 200 as shown in the example block diagram of Fig. 2b. The method **300** comprises obtaining **301,** from the at least two time tracking apparatuses 1a - 1n, a set of respective detection time measurements, wherein the obtained detection time measurements are included in a track time measurement event associated with the travelling path 21 of the moving object 2. Each of the detection time measurements comprises an indication of detection and a timestamp of a detection instance of the moving object 2 by that time tracking apparatus 1a - 1n. The method further comprises determining **303** a track time for a respective segment 21a - 21n of the traveling path of the moving object 2 by comparing at least a first and a second detection time measurement associated with that segment 21a - 21n.

In some exemplary embodiments, the method **300** may further comprise arranging **305** a first time tracking apparatus 1a of the at least two time tracking apparatuses to operate as a central time tracking hub 1a. The method **300** may further comprise establishing **307** a Bluetooth low energy, BLE, connection between the at least two time tracking apparatuses comprised in the time tracking system 200. Further, the method 300 may comprise receiving **309,** at the central time tracking hub 1a, an internal BLE connection time interval value from each of external time tracking apparatuses 1b - 1n in order to establish a synchronized time reference in the time tracking system 200. The method **300** may further comprise determining **311,** by a processing device 102a - 102n of each time tracking apparatus 1a - 1n, the timestamp of the detection instance of the moving object 2 based on the internal BLE connection time interval value of that time tracking apparatus 1a - 1n relative to the synchronized time reference. In some embodiments, the method 300 may further comprise determining **303** a track time for a respective segment 21a - 21n of the traveling path of the moving object 2 by comparing at least a first and a second detection time measurement associated with that segment 21a - 21n by means of the processing device 102a of the master time tracking device 1a. The determined track time may be provided as an output 201 of the processing device 102a to the remote mobile device 500 for further storage and/or analysis.

The different features and steps of the embodiments described herein may be combined in other combinations than those described.

Thus, the person skilled in the art realizes that the present invention by no means is limited to the examples described above. On the contrary, many modifications and variations are possible without departing from the scope of the appended claims. For instance, while in the above illustrated examples the moving object 2 is shown as a single moving object such as a single runner athlete 2, it is to be noted that multiple athletes may be identified, and their track time be determined simultaneously. Unique echo signatures from each individual athlete may be distinguished by the processing device, e.g. the processing device 102a of the master time tracking device 1a. Furthermore, in some examples, both functions of ultrasonic detection of the moving object 2 and signal strength analysis of the returned echo signal by the moving object 2 may be implemented. Thus, the system 200 not only captures the runner athlete 2 when intersecting the ultrasonic beams of the time tracking devices 1a - 1n, but also evaluates the returned echo signal strength recorded by each time tracking device 1a - 1n. In some examples, the recorded signal strength could allow differentiation between various body parts of the runner athlete 2, such as the hand, trunk, arms or legs. This feature advantageously improves time tracking precision of the system 200.

It should be noted that the word "comprising" does not exclude the presence of other elements or steps than those listed and the words "a" or "an" preceding an element do not exclude the presence of a plurality of such elements. It should further be noted that reference signs do not limit the scope of the claims, that the disclosure may be at least in part implemented by means of both hardware and software, and that several "modules" or "units" may be represented by the same item of hardware. As used herein, the term "if" may be construed to mean "when or "upon" or "in response to determining or "in response to detecting" depending on the context. Similarly, the phrase "upon determining" may be construed to mean "when it is determined" or "in response to determining" or "upon detecting and identifying occurrence of an event" or "in response to detecting occurrence of an event" depending on the context. The term "obtaining" is herein to be interpreted broadly and encompasses receiving, retrieving, collecting, acquiring, and so forth directly and/or indirectly between two entities configured to be in communication with each other or with other external entities. Although the figures may show a specific order of method steps, the order of the steps may differ from what is depicted. In addition, two or more steps may be performed concurrently or with partial concurrence.

## Claims

1. A time tracking apparatus (1) for determining a track time of a moving object (2) on a travelling path (21), being detected by the time tracking apparatus (1); wherein the time tracking apparatus comprises:
a portable housing (100) configured to be removably mounted on a target surface; and
an ultrasonic transducer (101) arranged within the housing and configured to transmit ultrasonic signals to a target region (3) in a surrounding environment of the apparatus (1), and to receive ultrasonic reflection signals associated with the transmitted ultrasonic signals reflected by the moving object intersecting the target region;
a processing device (102) arranged within the housing and configured to:
obtain a set of detection time measurements included in a track time measurement event associated with the travelling path (21) of the moving object (2), wherein at least one of the obtained detection time measurements is generated upon a respective reflection signal of the moving object being registered by the ultrasonic transducer (101); and
determine a track time for a respective segment (21a - 21n) of the traveling path of the moving object by comparing at least a first and a second detection time measurement associated with that segment.

2. The time tracking apparatus (1) according to claim 1, wherein at least one detection time measurement in the obtained set of detection time measurements is obtained from an external time tracking apparatus (11) arranged remotely from the time tracking apparatus (1), wherein the at least one obtained detection time measurement for the time tracking apparatus (1) and the external time tracking apparatus (11) comprises an indication of detection and a timestamp of a detection instance of the moving object (2) by that time tracking apparatus (1, 11).

3. The time tracking apparatus (1) according to claim 1 or 2, wherein the housing further comprises a beam emitter aperture (103) arranged to convey an ultrasonic beam (4) generated by the ultrasonic transducer (101) to the target region (3); and
wherein the ultrasonic transducer comprises:
at least one piezoelectric acoustic element (101a) configured to generate ultrasonic vibrations to emit the ultrasonic beam (4) to be incident on at least one portion of the moving object intersecting the target region (3);
an impedance matching layer (101b) arranged in between the piezoelectric acoustic element (101a) and the beam emitter aperture (103) in order to maximize an acoustic energy transmission of the ultrasonic beam to the target region (3);
wherein the housing (100) further comprises:
an insulating layer (104) comprising a first (104a) and a second portion (104b), wherein each portion is made of a respective first and second insulating material; wherein the insulating layer (104) is configured to dampen ultrasonic vibration signals originating from vibrations of the housing (100) registered by the ultrasonic transducer (101).

4. The time tracking apparatus (1) according to claim 3, wherein the ultrasonic beam generated by the piezoelectric acoustic element (101a) has a conical shape or a fan shape with a divergence angle between 2 degrees and 45 degrees, more specifically between 5 degrees and 20 degrees and even more specifically between 8 degrees and 12 degrees.

5. The time tracking apparatus (1) according to any one of claims 3 or 4, wherein the impedance matching layer (101b) is made of a thermoplastic polymer material, or Aluminum, low density polyethylene, LDPE, or polypropylene, PP.

6. The time tracking apparatus (1) according to any one of claims 3 - 5, wherein the first portion (104a) of the insulating layer is made of Ethylene Vinyl Acetate, EVA, plastic and wherein the second portion (104b) is made of a silicon-based polymer material.

7. A time tracking system (200) for determining a track time of a moving object (2) on a travelling path (21), the time tracking system (200) comprising at least two time tracking apparatuses (1a - 1n) according to any one of claims 1 - 6, wherein a first time tracking apparatus (1a) of the at least two time tracking apparatuses is configured to operate as a central time tracking hub (1a) in order to obtain a set of respective detection time measurements, included in the track time measurement event associated with the travelling path (21) of the moving object (2), from a plurality of external time tracking apparatuses (1b - 1n) arranged remotely from the first time tracking apparatus (1a), wherein the detection time measurement for the central time tracking hub (1a) and the obtained respective detection time measurements for each external time tracking apparatus (1b - 1n) comprise an indication of detection and a timestamp of a detection instance of the moving object (2) by that time tracking apparatus (1a - 1n).

8. The time tracking system (200) according to claim 7, wherein the measurement event for the moving object (2) is commenced when the moving object (2) intersects the target region (3) of any one of the at least two tracking apparatuses (1a - 1n) for the first time.

9. The time tracking system (200) according to any one of claims 7 or 8, wherein each time tracking apparatus (1a - 1n) comprises a transceiver module (105) adapted to establish a Bluetooth low energy, BLE, connection with at least one other time tracking apparatus comprised in the time tracking system (200).

10. The time tracking system (200) according to claim 9, wherein each time tracking apparatus (1a - 1n) is configured to exchange its respective internal BLE connection time interval value with the central time tracking hub (1a) in order to establish a synchronized time reference in the time tracking system (200).

11. The time tracking system (200) according to claim 10, wherein the timestamp of the detection instance of the moving object (2) for each time tracking apparatus (1a - 1n) is determined, by the processing device (102a - 102n) of that time tracking apparatus, based on the internal BLE connection time interval value of that time tracking apparatus (1a - 1n) relative to the synchronized time reference.

12. The time tracking system (200) according to any one of claims 7 - 11, wherein the processing device (102a) of the central time tracking hub (1a) is configured to determine a track time for the respective segment (21a - 21n) of the traveling path of the moving object (2) by comparing at least a first and a second detection time measurement associated with that segment (21a - 21n).

13. A method (300) of determining a track time of a moving object (2) on a travelling path (21), being detected by at least two time tracking apparatuses (1a - 1n) according to any one of claims 1 - 12 and comprised in a time tracking system (200), wherein the method comprises:
obtaining, from the at least two time tracking apparatuses (1a - 1n), a set of respective detection time measurements, wherein the obtained detection time measurements are included in a track time measurement event associated with the travelling path (21) of the moving object (2), and
wherein each detection time measurements comprises an indication of detection and a timestamp of a detection instance of the moving object (2) by that time tracking apparatus (1a - 1n);
wherein the method further comprises:
determining a track time for a respective segment (21a - 21n) of the traveling path of the moving object (2) by comparing at least a first and a second detection time measurement associated with that segment (21a - 21n).

14. The method according to claim 13, wherein the method further comprises:
arranging a first time tracking apparatus (1a) of the at least two time tracking apparatuses to operate as a central time tracking hub (1a);
establishing a Bluetooth low energy, BLE, connection between the at least two time tracking apparatuses comprised in the time tracking system (200);
receiving, at the central time tracking hub (1a), an internal BLE connection time interval value from each of external time tracking apparatuses (1b - 1n) in order to establish a synchronized time reference in the time tracking system (200);
determining, by a processing device (102a - 102n) of each time tracking apparatus (1a - 1n), the timestamp of the detection instance of the moving object (2) based on the internal BLE connection time interval value of that time tracking apparatus (1a - 1n) relative to the synchronized time reference.

15. A computer program product comprising instructions which, when the program is executed by one or more processors of the processing device of each time tracking apparatus, causes that processing device to carry out the method according to any one of the claims 13 or 14.
